# EUROPÄISCHE PATENTSCHRIFT

(11) **EP 0 584 325 B1**
(45) Veröffentlichungstag und Bekanntmachung des Hinweises auf die Patenterteilung: **05.06.1996**
(21) Anmeldenummer: 93905331.0
(22) Anmeldetag: 10.03.1993
(51) Int. Cl.: B29B 9/06, B29C 47/34, B29C 47/88

(54) **VORRICHTUNG ZUM ABKÜHLEN UND GRANULIEREN VON SCHMELZFLÜSSIG AUS DÜSEN AUSTRETENDEN STRÄNGEN AUS THERMOPLASTISCHEN KUNSTSTOFFEN**
DEVICE FOR COOLING AND GRANULATING MOLTEN THERMOPLASTIC STRANDS EMERGING FROM DIES
DISPOSITIF POUR REFROIDIR ET GRANULER DES JONCS THERMOPLASTIQUES SORTANT EN FUSION DE FILIERES

(30) Priorität: 12.03.1992 DE 4207944
(43) Veröffentlichungstag der Anmeldung: 02.03.1994
(73) Patentinhaber: Rieter Automatik GmbH, D-63757 Grossostheim (DE)
(72) Erfinder: KEILERT, Jürgen, D-8751 Kleinwallstadt (DE); GLÖCKNER, Frank, D-8750 Aschaffenburg (DE); MEIDHOF, Helmut, D-8754 Gro ostheim 3 (DE); HOHM, Laurenz, D-8754 Gro ostheim 3 (DE)
(74) Vertreter: Bardehle, Heinz, Dipl.-Ing.
(86) Internationale Anmeldenummer: EP9300542
(87) Internationale Veröffentlichungsnummer: WO9317850

(56) Entgegenhaltungen:
- EP-A- 0 086 400
- CH-A- 576 256
- DE-A- 2 103 698
- DE-B- 1 295 176
- DE-B- 1 916 222
- PATENT ABSTRACTS OF JAPAN vol. 11, no. 71 (M-567)(2518) 4. März 1987 & JP-A-61 227 014 (MITSUBISHI METAL CORP) 9 October 1986

## Beschreibung

Die Erfindung bezieht sich auf eine Vorrichtung zum Abkühlen und Granulieren von schmelzflüssig aus Düsen austretenden Strängen aus thermoplastischen Kunststoffen, die entweder längs ihrer an den Düsen beginnenden Fallinie abfallen oder in einer Betriebslage durch ein Kühlflüssigkeitsbad unter freier Spannung zwischen in diesem angeordneten Führungsrollen geleitet und danach in einen Granulator eingeführt werden, wobei im Bereich zwischen den Düsen und dem Kühlflüssigkeitsbad eine Vorkühleinrichtung angeordnet ist, die die aus den Düsen austretenden Stränge trägt und dem Kühlflüssigkeitsbad zuleitet.

Eine derartige Vorrichtung ist aus der DE-PS 11 76 346 bekannt. Bei dieser Vorrichtung sind zwischen den Düsen und dem Kühlflüssigkeitsbad Kühlwalzen vorgesehen, in die die aus den Düsen kommenden Stränge eingefädelt werden müssen, um danach durch das Kühlflüssigkeitsbad geleitet zu werden. Im Kühlflüssigkeitsbad durchlaufen die Stränge zwei Paare von Umlenkrollen, die dafür sorgen, daß die Stränge mit Sicherheit durch das Kühlflüssigkeitsbad hindurchgeleitet werden. Nach Verlassen des Kühlflüssigkeitsbades werden die Stränge zunächst von einem umlaufenden Transportband getragen, um danach in den Eingang des Granulators zu gelangen. Bei dieser Vorrichtung müssen die Stränge, wie im Falle der Verwendung von derartigen Kühlflüssigkeitsbädern üblich, von Hand im Bereich zwischen den Düsen und dem Granulator in die die Stränge jeweils tragenden bzw. führende Organe eingefädelt werden. Dies ist nicht nur eine aufwendige Arbeit, es handelt sich dabei auch um einen gefährlichen Vorgang, da das für die Überwachung einer derartigen Vorrichtung zuständige Personal in die heißen Stränge eingreifen muß. Dies ist vor allem bei Erzeugung einer größeren Anzahl von Strängen, z. B. 50 Stränge und mehr, wegen der Breite des Raumes, den die Stränge dabei einnehmen, schwierig. Bei jedem Anfahren der Vorrichtung muß zunächst gewartet werden, bis qualitativ einwandfreies Material aus den Düsen austritt, was erfahrungsgemäß nach dem Anfahren eine gewisse Zeit in Anspruch nimmt, während der die Stränge längs ihrer Fallinie zunächst neben der Vorrichtung in einen Abfallbehälter geleitet werden. Stellt das Bedienungspersonal eine einwandfreie Qualität der austretenden Stränge fest, muß dann mit einem messerartigen Werkzeug von Hand über die Düsen hinweggestrichen werden, um in den Strängen eine Unterbrechung zu erzeugen, nach der dann die neu austretenden Stränge in das Kühlflüssigkeitsbad zu leiten sind. Dies ist um so schwieriger, je mehr Stränge aus den Düsen austreten, so daß bei dieser Manipulation von Hand meist zunächst nur einen Teil der Düsen in der beschriebenen Weise abgestrichen werden kann so daß die aus den anderen Düsen austretenden Stränge weiterhin in den Abfallbehälter fallen.

Es ist darüber hinaus aus der DE-AS 22 30 187 eine Vorrichtung zum Abkühlen von schmelzflüssig aus Düsen austretenden Strängen aus thermoplastischen Kunststoffen bekannt, bei der die Stränge einem Paar von Transportbändern zugeleitet werden, von denen unter mäanderförmiger Führung die Stränge zusammen mit den Transportbändern durch ein Kühlflüssigkeitsbad geleitet werden.

Es ist weiterhin aus der DE-AS 12 95 176 bekannt, aus Düsen austretende Stränge vor der Zuführung zu einem Granulator in einem Kühlflüssigkeitsbad abzukühlen, in dem die Stränge von einer Fangschale aufgefangen werden. Die Fangschale wird dann längs einer Verschiebebahn verschoben, wobei sich die Stränge offenbar in einem Fangschlitz der Fangschale festhaken sollen. Sie werden von der verschobenen Fangschale mitgenommen und dabei aus dem Kühlwasserbad herausgezogen, bis sie zu einem Granulator gelangen. Für das Einfädeln in den Granulator werden die Stränge vor der Fangschale abgeschnitten, so daß ein vorher in die Fangschale geleitetes Kunststoffgemenge zunächst in diesem verbleibt und für einen weiteren Arbeitsvorgang entfernt werden muß.

Der Erfindung liegt die Aufgabe zugrunde, den Vorgang des Einfädelns der Stränge in einer Weise zu automatisieren, daß dabei sichergestellt wird, daß stets die gesamte Anzahl der gelieferten Stränge mit ihren Anfängen gleichzeitig in den Granulator eintreten kann.

Erfindungsgemäß geschieht dies dadurch, daß hinter der Vorkühleinrichtung zur klemmenden Erfassung von Stranganfängen eine Greifeinrichtung mit sich öffnenden und schließenden, längs einer Führungsbahn verschiebarren, gegenüberliegende Klemmwalzen zur klemmenden Erfassung der Stranganfänge angeordnet ist, die die Stranganfänge - nach gemeinsamer Durchtrennung der Stränge mittels eines durch die Fallinie der Stränge bewegten verschiebbaren Trennelements - längs einer durch den Bereich des Kühlflüssigkeitsbades verlaufenden Führungsbahn bis zum Granulator führt.

Der Greifeinrichtung werden auf diese Weise stets gemeinsam Stranganfänge angeboten, die nach Durchtrennung der Stränge mittels des verschiebbaren Trennelements entstehen, so daß das daraufhin erfolgende Einfädeln der Stränge durch die längs der Führungsbahn bewegte Greifeinrichtung praktisch ohne gegenseitigen Versatz der Stranganfänge in Längsrichtung erfolgt. Die längs der Führungsbahn geführte Greifeinrichtung kann also sicher von dem Trennelement geschnittene Stranganfänge erfassen, denen in der Greifeinrichtung jede Möglichkeit genommen ist, mit benachbarten Strängen zu verkleben. Es erreichen somit die Stranganfänge eines einwandfreien Materials im wesentlichen gleichzeitig den Granulator, so daß dieser sofort Stränge zu Granulat vollwertiger Qualität schneiden kann. Demgegenüber entsteht beim Einfädeln einer größeren Anzahl von Strängen von Hand immer eine Verklumpung am Anfang der Stränge, hinter der die Stränge noch eine gewisse Zeit mehr oder minder verklebt einlaufen. Aus dieser Masse des zugeführten Materials kann der Granulator kein einwandfreies Granulat schneiden, da ein solches nur aus sauberen einzelnen Strängen geschnitten werden kann.

Da die Greifeinrichtung mit gegenüberliegenden Klemmwalzen zur Erfassung der Stranganfange versehen ist, kann durch diese auch ein Vorschub auf die Stränge ausgeübt werden.

Die Führungsbahn und damit die Greifeinrichtung kann man bis unmittelbar vor dem Granulator führen, von wo aus dann die Stränge direkt in den Eingang des Granulators gelangen können. Es ist aber auch möglich, die Führungsbahn vor dem Granulatoreingang in einer Endstellung enden zu lassen, in der die Walzen im Sinne einer Vorschubbewegung die Stränge in Bewegung versetzen, bis die Stränge vom Granulator erfaßt sind. Diese Art der Zuführung der Stränge zum Granulator hat den Vorteil, daß es nicht erforderlich ist, die Greifeinrichtung bis dicht an den Granulator heranzuführen, was bei Ungleichmäßigkeit der Lage der einzelnen Stränge in der Greifeinrichtung dazu führen könnte, daß einzelne Stränge vom Granulator gar nicht erfaßt werden. Wenn jedoch die Greifeinrichtung mit ihren Walzen die Stränge aus einer gewissen Entfernung vor dem Granulator in diesen einführen kann, und zwar wegen der entsprechenden Drehung der Walzen, dann gewährleistet diese Art der Betätigung der Greifeinrichtung, daß letzten Endes sämtliche Stränge auch sicher vom Granulator erfaßt werden können.

Die Vorkühlung läßt sich in günstiger Weise dadurch erreichen, daß man die Vorkühleinrichtung als mit der Kühlflüssigkeit beschickte Ablaufrinne ausbildet, die unterhalb der Düsen zum Auffangen der Stränge angeordnet ist. Bei dieser Ablaufrinne handelt es sich um ein einfaches, von oben her zugängiges Bauelement, auf dem sich die aus den Düsen herabfallende Stränge unter dem Einfluß des über die Ablaufrinne fließenden Kühlflüssigkeitsstroms von selbst ausrichten. Im Bereich der Ablaufrinne werden die Stränge ausreichend gekühlt, um im Auschluß daran in Form der Stranganfänge von der Greifeinrichtung ohne wesentlichen Deformation erfaßt werden zu können.

In technisch sinnvoller Weise läßt sich die Ablaufrinne mit dem Trennelement kombinieren, nämlich dadurch, daß die Ablaufrinne längs einer Schlittenführung verschiebbar und ihr das Trennelement zugeordnet ist, das beim Verschieben der Stirnseite der Ablaufrinne durch die Fallinie der Stränge in die Betriebslage die Stränge erfaßt und durchtrennt.

Mit einer derart bewegten Ablaufrinne läßt sich erreichen, daß diese in ihrer Außerbetriebslage die Stränge in Fallinie in einen Abfallbehälter fallen läßt, was, wie oben dargelegt, beim Anfahren der Anlage erforderlich, woraufhin dann bei Austreten von Strängen aus einwandfreien Material die Ablaufrinne mit ihrer Stirnseite durch die Fallinie der Stränge verschoben werden kann, wobei das ihr zugeordnete Trennelement die Stränge erfaßt und gemeinsam durchtrennt.

Es sei noch darauf hingewiesen, eine derartige relativ kurze Ablaufrinne mit einem Trennelement in Zusammenwirken mit einer weiteren Ablaufrinne aus der DE-PS 32 05 052 bekannt ist.

Die Führungsbahn führt zweckmäßig durch das Kühlflüssigkeitsbad und um die Führungsrollen herum, so daß mit dem entsprechenden Lauf der Greifeinrichtung die von ihr erfaßten Stränge durch das Kühlflüssigkeitsbad und dabei auch um die Führungsrollen herumgeführt werden, womit der automatische Einfädelungsvorgang vollzogen ist. Dabei muß allerdings die Führungsbahn im Bereich des Eingangs- und des Ausgangs zum Kühlflüssigkeitsbad entsprechende Kurven durchlaufen. Es ist jedoch auch möglich, die Führungsbahn im wesentlichen gradlinig auszubilden. Hierzu werden die Führungsrollen derart verschiebbar angeordnet, daß sie aus dem Kühlflüssigkeitsbad anhebbar und in dieses absenkbar sind, und daß die Führungsbahn zwischen Kühlflüssigkeitsbad und der angehobenen Stellung der Führungsrollen verläuft, wobei die Führungsrollen nach Erreichen der Endstellung durch die Greifeinrichtung in die abgesenkte Lage verschoben werden.

Bei dieser Gestaltung der Führungsbahn werden die Stränge zunächst über das Kühlflüssigkeitsbad freischwebend hinweggeführt, woraufhin die vorher angehobenen Führungsrollen, unter denen die Führungsbahn verläuft, abgesenkt werden, wobei sie die Stränge in das Kühlflüssigkeitsbad eintauchen. Die Stränge müssen dann weiterhin um die Führungsrollen herum durch das Kühlflüssigkeitsbad verlaufen.

In den Figuren sind Ausführungsbeispiele der Erfindung dargestellt. Es zeigen:
- Figur 1a und b: die Vorrichtung in Seitensicht, und zwar in Figur 1a in der Betriebsposition, in der die Stränge in den Granulator gelangen, und in Figur 1b in der Anfahrposition, in der die Stränge zunächst aus den Düsen entlang der Fallinie abfallen,
- Figur 2: eine Draufsicht auf die Vorrichtung gemäß Figur 1a,
- Figur 3: eine Abwandlung der Vorrichtung gemäß Figur 1 mit einer oberhalb des Kühlflüssigkeitsbades verlaufenden Führungsbahn,
- Figur 4: die Greifeinrichtung in geschlossenem Zustand,
- Figur 5: die Greifeinrichtung in geöffneten Zustand.

Die in Figur 1a dargestellte Vorrichtung erhält die Stränge 1 von dem die Düsen 2 aufweisenden Düsenkopf 3, aus dem die Stränge 1 schmelzflüssig austreten. In der Figur 1a dargestellten Betriebsposition, in der die Stränge 1 in den Granulator 4 eintreten, fallen die Stränge 1 auf die als Ablaufrinne 5 ausgebildete Vorkühleinrichtung, an deren linken Ende ein Überlauf 6 für den Zutritt von Kühlwasser angeordnet ist, das aus dem Wasserkasten 7 in den Überlauf 6 eintritt. Der Wasserkasten 7 erhält das Kühlwasser über den Einlaufstutzen 8. Das durch den Überlauf 6 austretende Kühlwasser leitet die Stränge 1 über die Ablaufrinne 5 in das Kühlflüssigkeitsbad 9. Die hierfür erforderliche Umlenkung der Stränge 1 von der horizontal angeordneten Ablaufrinne 5 in die Schrägrichtung des anschließenden Verlaufs der Stränge 1 in das Kühlflüssigkeitsbad 9 hinein erfolgt durch die Abrundung 10 am Ende der Ablaufrinne 5. Die Stränge 1 werden durch die Führungsrollen 11 und 12 im Kühlflüssigkeitsbad 9 umgelenkt und schließlich aus dem Kühlflüssigkeitsbad 9 mittels der Umlenkrolle 13 aus diesem herausführt. Nach Umlenkung der Stränge 1 um die Umlenkrolle 13 gelangen die Stränge 1 direkt in den Granulator 4. Hier ist eine Standardausführung als Granulator gezeigt, der die beiden Einzugswalzen 14 und 15 sowie die Messerwalze 16 mit dem Gegenmesser 17 enthält. Das durch die Messerwalze 16 von den eingeführten Strängen 1 abgeschnittene Granulat fällt dann durch den Auslaßschacht 18 aus dem Granulator 4 zur weiteren Behandlung bzw. Verwendung heraus.

Die Kühlung der Stränge 1 erfolgt bei der dargestellten Vorrichtung in zwei Stufen, nämlich zunächst mittels der als Vorkühleinrichtung dienenden Ablaufrinne 5, auf der die Stränge soweit gekühlt werden, daß sie wenigstens äußerlich verfestigt sind. Längs ihrer weiteren Führung durch das Kühlflüssigkeitsbad 9 werden dann die Stränge 1 so weit abgekühlt, daß sie in der üblichen Weise mittels des Granulators 4 granuliert werden können. Bei dem Kühlflüssigkeitsbad 9 handelt es sich um die Wanne 19, in der sich als Kühlflüssigkeit Wasser befindet, dessen Temperatur so eingestellt ist, daß sich der für das anschließende Granulieren erforderliche Kühlungsgrad der Stränge 1 ergibt.

Die in der Figur 1a dargestellte Vorrichtung weist für das automatische Einfädeln von Anfängen der Stränge 1 die Führungsbahn 20 auf, die für die Führung der Greifeinrichtung 21 dient, die selbstätig von der strichpunktiert gezeichneten Position A in die Position B laufen kann. Beim Durchlaufen der Führungsbahn 20 von der Position A in die Position B nimmt die Greifeinrichtung 21 von ihr erfaßte Stranganfänge längs der Führungsbahn 20 mit, wobei die von der Greifeinrichtung 21 mitgezogenen Stränge sich in der in Figur 1a dargestellten Lage um die beiden Führungsrollen 11 und 12 schlingen und von der Umlenkrolle 13 umgelenkt werden, bis sie schließlich unmittelbar vor den Eingang des Granulators 4 gelangen.

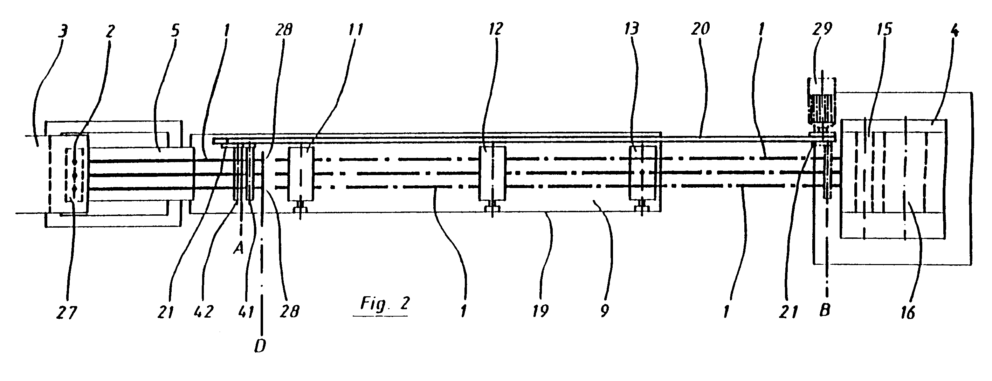

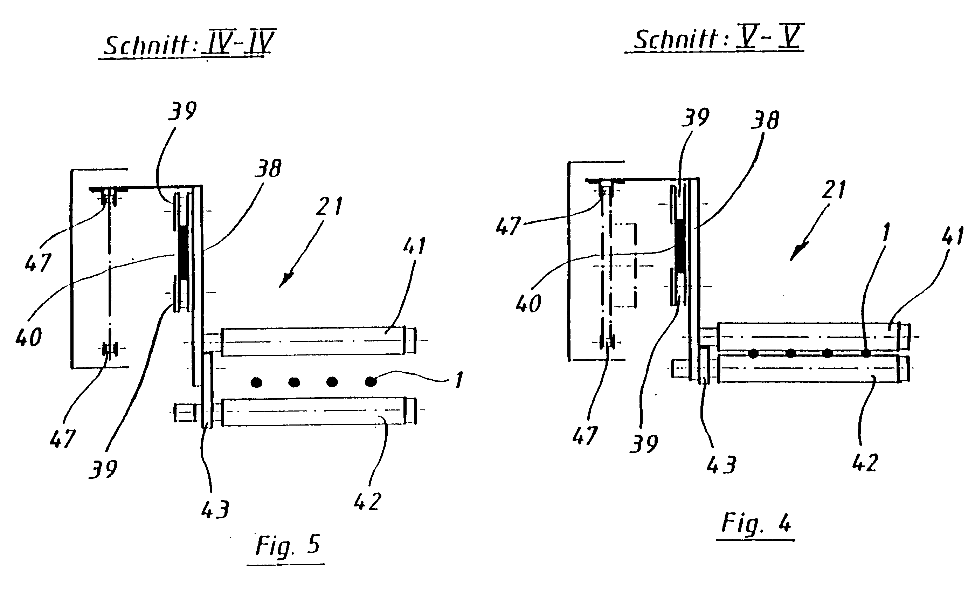

Die Greifeinrichtung 21 erfaßt die ihr zugeführten Stranganfänge in einer Weise, wie dies im einzelnen in Zusammenhang mit den Figuren 4 und 5 erläutert ist. Um nun der Greifeinrichtung 21 gemeinsam die Anfänge der aus dem Düsenkopf 3 austretenden Stränge 1 zuzuführen, die im Augenblick ihrer Erfassung durch die Greifeinrichtung 21 längs der strichpunktierten Linie D in Figur 2 liegen (Bezugszeichen 28), ist das Trennelement 22 vorgesehen, das in Figur 1a in einer Position gezeigt ist, in der es sich nach erfolgter Durchtrennung der Stränge 1 befindet.

Nachstehend sei auf die Gestaltung und die Funktion des Trennelements 22 eingegangen.

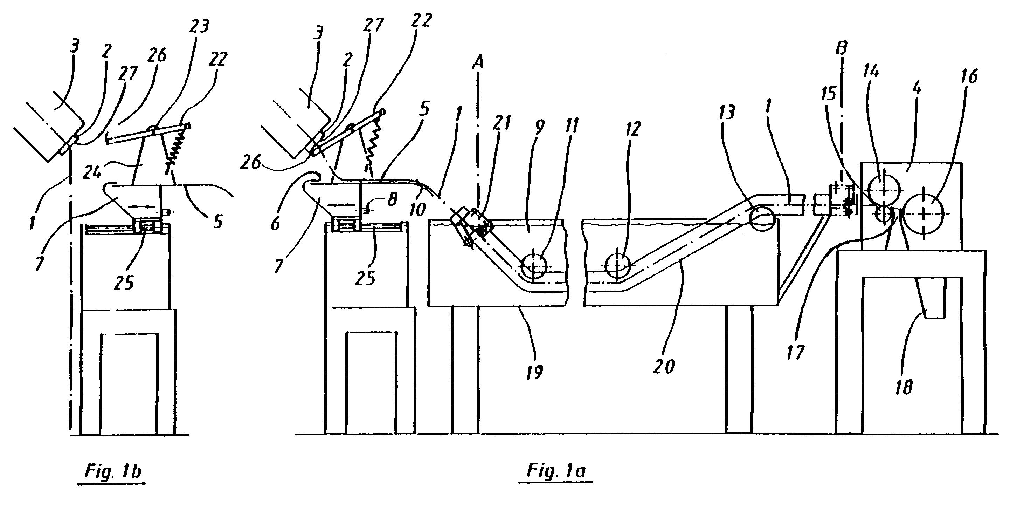

Das Trennelement 22 ist in seiner Position vor Durchtrennung der Stränge 1 in Figur 1b dargestellt. Das Trennelement 22 ist als Hebel ausgebildet, der auf der Drehachse 23 gelagert ist. Die Drehachse 23 ist an der Stütze 24 befestigt, die auf der Ablaufrinne 5 angeordnet ist. Die Ablaufrinne 5 zusammen mit dem Wasserkasten 7 ist mittels der Schlittenführung 25 in horizontaler Richtung hin- und her verschiebbar. In der Darstellung gemäß Figur 1b befindet sich das Trennelement 22 mit den damit in Zusammenhang stehenden Bauteilen in der rechten Verschiebeposition der Schlittenführung 25, in dem die Stränge 1a als Abfall aus den Düsen 2 austreten und längs ihrer Fallinie nach unten abfallen, z. B. in irgendeinen nicht dargestellten Abfallbehälter. Es handelt sich dabei um die Anfahrposition, in der nach dem Inbetriebsetzen des Düsenkopfes 3 zunächst noch degradiertes Material austritt, das aufgrund des Herabfallens längs der Fallinie nicht in die in Figur 1a dargestellte Vorrichtung gelangen kann.

Wenn dann festgestellt wird, daß aus den Düsen 2 qualitatives einwandfreies Material austritt, wird der Wasserkasten mit der Ablaufrinne 5 und damit das Trennelement 22 nach links verschoben, das dabei über die Stütze 24 das Trennelement 22 mitnimmt. Das Trennelement 22 besitzt an seinem linken Ende das Messer 26, das bei dieser Bewegung zunächst auf die Fläche 27 der zu einem Düsenpaket zusammengefaßten Düsen 2 auftrifft und im weiteren Verlauf der Bewegung der Schlittenführung 25 über die Fläche 27 hinweggleitet, bis das Messer 26 in die in der Figur 1a dargestellte Lage gerät. Auf diesem Wege schneidet das Messer 26 die aus den Düsen 2 austretenden Stränge durch, so daß die nunmehr aus den Düsen austretenden Stranganfänge (siehe Bezugszeichen 28 in Figur 2) auf die Ablaufrinne 5 gelangen und über diese mit ihrer Abrundung 10 in Richtung auf die Greifeinrichtung 21 vorgeschoben werden. Dies wird durch die aus dem Überlauf 6 austretende Kühlflüssigkeit bewirkt, die die Stranganfänge 28 gleichmäßig über die Ablaufrinne 5 in Richtung auf das Kühlflüssigkeitsbad 9 schwemmt.

Im einzelnen sind die Vorgänge des Durchtrennens der Stränge und ihres Auffangens durch die Ablaufrinne 5 in der oben erwähnten DE-PS 32 05 052 beschrieben.

Durch diese an sich bekannte Maßnahme des Durchtrennens der Stränge 1 werden in Bewegungsrichtung der Stränge auf gleicher Höhe liegende Stranganfänge 28 (siehe Figur 2) erzeugt, was hier dazu ausgenutzt wird, der Greifeinrichtung 21 gemeinsam erfaßbare Stranganfänge anzubieten, die praktisch unmittelbar hinter ihrer Schnittstelle (siehe Figur 2) erfaßt werden, ohne das vor der Erfassungsstelle größere Stranglängen existieren, die den oben beschriebenen Einfädelungsvorgang der Stränge beeinträchtigen könnten.

In Figur 2 ist die Vorrichtung gemäß Figur 1a in Draufsicht dargestellt, wobei im Bereich der Ablaufrinne das Trennelement 22 mit seinen weiteren Bauteilen aus Gründen der Übersichtlichkeit weggelassen ist. Gezeigt sind drei nebeneinanderliegende Stränge 1, die von der Ablaufrinne 5 her durch die Greifeinrichtung 21 in das Kühlflüssigkeitsbad 9 und in den Granulator 4 laufen. Es sei darauf hingewiesen, daß normalerweise mit derartigen Vorrichtungen eine wesentlich größere Zahl von nebeneinanderliegenden Strängen verarbeitet wird, z. B. 50 und mehr Stränge, so daß sich die Gesamtzahl der Stränge 1 über eine relativ breite Zone erstreckt, in der dann die Stranganfänge 28 gleichzeitig durch die Greifeinrichtung 21 erfaßt werden müssen.

In Figur 2 ist noch der Antriebsmotor 29 dargestellt, der für die Bewegung eines in der Führungsbahn 20 laufenden Antriebsorgans dient, beispielsweise einer Kette, durch das die Greifeinrichtung 21 aus der Position A in die Position B und zurück verschoben wird.

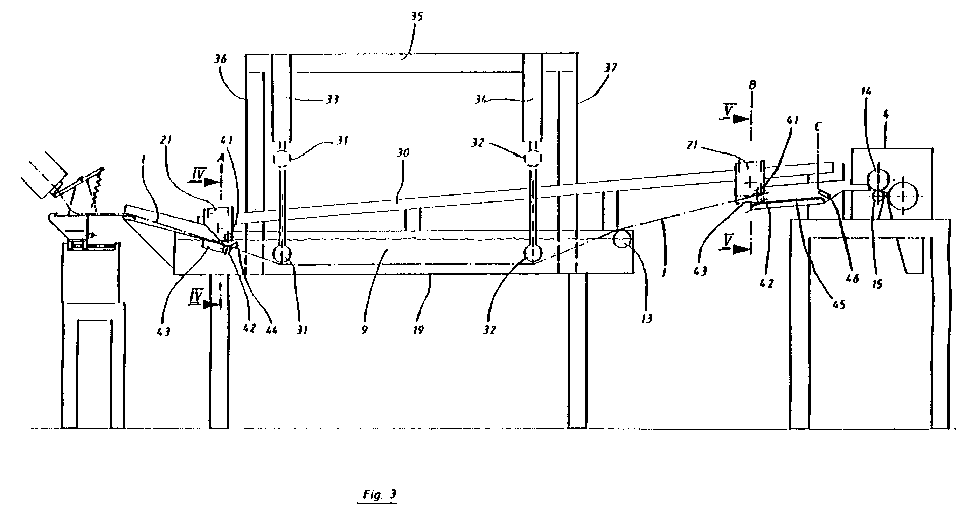

Figur 3 zeigt eine Variante in der Ausführung der Vorrichtung gemäß den Figuren 1 und 2. Diese Variante besteht darin, daß die Führungsbahn 30 in gradliniger Erstreckung angeordnet ist, und zwar oberhalb des Kühlflüssigkeitsbades 9, so daß beim Lauf der Greifeinrichtung 21 von der Position A in die Position B die Stränge 1 zunächst mit leichtem Durchhang oberhalb der Wanne 19 gezogen werden. Um diese zunächst erfolgende Führung der Stränge 1 zu ermöglichen, sind die Führungsrollen 31 und 32 (entsprechend den Führungsrollen 11 und 12 gemäß Figur 1) aus dem Kühlflüssigkeitsbad 9 abhebbar ausgebildet, wie dies durch die strichpunktiert gezeichnete Lage der Führungsrollen 31 und 32 dargestellt ist. Die Führungsrollen 31 und 32 hängen an hydraulisch betätigten Vorschüben 33 und 34, die an der Stütze 35 aufgehängt sind. Die Stütze 35 ist auf den Trägern 36 und 37 gelagert.

Für die Bewegung der Greifeinrichtung 21 aus der Position A in die Position B werden die Führungsrollen 31 und 32 in die angehobene strichpunktiert gezeichnete Lage verschoben, so daß für die von der Greifeinrichtung 21 verschobenen Stränge 1 der notwendige Platz zur Verfügung steht. Nachdem die Greifeinrichtung 21 die Position B erreicht hat, werden dann die Führungsrollen 31 und 32 in das Kühlmittelbad 9 abgesenkt, wodurch auch die Stränge 1 in das Kühflüssigkeitsbad 9 eintauchen, woraufhin im weiteren Verlauf der Verarbeitung der Stränge 1 die Umlenkrollen 31 und 32 die Stränge 1 in der gleichen Weise führen, wie dies im Zusammenhang mit der Figur 1 oben erläutert ist.

Bezüglich der sonstigen Funktion der Bauelemente der Vorrichtung gemäß Figur 3 sei auf die diesbezügliche Erläuterung zu Figuren 1a und b verwiesen.

Zur Erläuterung der Funktion der Greifeinrichtung 21 seien zunächst die Figuren 4 und 5 beschrieben.

Gemäß Figur 4, die einen Schnitt längs der Linie IV-IV aus Figur 3 zeigt, besteht die Greifeinrichtung 21 aus dem Winkelträger 38, an dem die beiden Leitrollen 39 angebracht sind, die eine in der Führungsbahn 30 angebrachte Schiene 40 umgreifen und damit der Greifeinrichtung 21 eine sichere Lagerung mit Beweglichkeit in Längsrichtung der Führungsbahn 30 geben. An dem Winkelträger 38 sind weiterhin die beiden Klemmwalzen 41 und 42 angebracht, von denen die Klemmwalze 42 in die in Figur 4 dargestellte Klemmstellung bzw. in die in Figur 5 dargestellte Offenstellung bringbar ist. Zu diesem Zweck sitzt die Klemmwalze 42 an dem am Winkelträger 38 drehbar befestigten Arm 43, der, wie Figur 3 zeigt, durch seine Verschwenkung gegenüber dem Winkelträger 38 die Klemmwalze 42 entweder von der Klemmwalze 41 wegbewegt (siehe Figur 5) oder in Richtung auf die Klemmwalze 41 drückt (siehe Figur 4). Im übrigen kann man das Zusammenführen der beiden Klemmwalzen 41 und 42 in die in Figur 4 dargestellte Klemmlage durch eine entsprechende Feder, die die beiden Klemmwalzen 41 und 42 zusammenzieht, unterstützten. Die Öffnung der beiden Klemmwalzen 41 und 42 gemäß Darstellung in Figur 5 erfolgt in der Position A mittels des Nockens 44, auf den beim Rückführen der Greifeinrichtung 21 in die Position A die Klemmwalze 42 aufläuft, womit sie mittels des Arms 43 von der Klemmwalze 41 abgehoben wird.

Wenn die Greifeinrichtung 21 längs der Führungsbahn 30 zu der Position B überführt wird, setzt die Klemmwalze 42 auf der Mitnahmeschiene 45 auf, die einen Reibbelag trägt, der dafür sorgt, daß bei der Weiterbewegung der Greifeinrichtung 21 in Richtung auf den Granulator 4 die Klemmwalze 42 in Drehung versetzt wird, und zwar mit derartiger Drehrichtung, daß dabei die zwischen der Klemmwalze 42 und 41 eingeklemmten Stränge 1 vorgeschoben werden. Diese Vorschubbewegung verläuft solange, bis am Ende der Mitnahmeschiene 45 die Klemmwalze 42 auf dem Nocken 46 trifft, der ähnlich wie der Nocken 44 dafür sorgt, daß die Klemmwalze 42 von der Klemmwalze 41 abhebt und damit die vorher eingeklemmten Stränge 1 freigibt (Position C). Die Stränge 1 sind dann soweit aufgrund der erzwungenen Drehung der Klemmwalze 42 vorgeschoben, daß sie in den Granulator 4 gelangen und von den Einzugswalzen 14 und 15 erfaßt werden.

In den Figuren 4 und 5 ist noch die in der Führungsbahn 30 laufende Kette 47 eingezeichnet, die von dem in Figur 2 dargestellten Antriebsmotor 29 angetrieben wird. Die Kette ist an dem Winkelträger 38 befestigt. Sie ist in sich geschlossen. Der der Befestigungsstelle jeweils gegenüberliegende Bereich der Kette 27 hängt frei in der Führungsbahn 30 bzw. kann in dieser von Trägerrollen geführt sein.

Zum automatischen Einfädeln von Stranganfängen 28 werden diese in der Position A von den beiden Klemmwalzen 41 und 42 erfaßt und eingeklemmt, woraufhin die Greifeinrichtung 21 in die Position B überführt wird, wo die Einklemmung der Stränge 1 aufgehoben wird, wie dies vorstehend beschrieben ist. Die Stränge 1 können dann in den Granulator 4 gelangen und werden von diesem granuliert. Während des Granulationsbetriebes bleibt die Greifeinrichtung 21 in der Position B bzw. der danebenliegenden Position C (geöffnete Klemmwalzen 41 und 42) stehen, da in dieser Lage die Greifeinrichtung 21 den Lauf der Stränge 1 nicht stört. Wenn dann aus irgendeinem Grunde ein erneutes Anfahren der Vorrichtung erforderlich ist, wird die Greifeinrichtung 21 mittels des Antriebsmotors 29 in die Position A verschoben, woraufhin dann das Anfahren der Vorrichtung und die Übernahme der Stranganfänge 28 in der vorstehend beschriebenen Weise und damit der Beginn eines neuen Granuliervorgangs erfolgt.

## Patentansprüche

1. Vorrichtung zum Abkühlen und Granulieren von schmelzflüssig aus Düsen austretenden Strängen (1) aus thermoplastischen Kunststoffen, die entweder längs ihrer an den Düsen (2) beginnenden Fallinie abfallen oder in einer Betriebslage durch ein Kühlflüssigkeitsbad (9) unter freier Spannung zwischen in diesem angeordneten Führungsrollen (11,12) geleitet und danach in einen Granulator (4) eingeführt werden, wobei im Bereich zwischen den Düsen (2) und dem Kühlflüssigkeitsbad (9) eine Vorkühleinrichtung (5) angeordnet ist, die die aus den Düsen (2) austretenden Stränge (1) trägt und dem Kühlflüssigkeitsbad (9) zuleitet, **dadurch gekennzeichnet**, daß hinter der Vorkühleinrichtung (5) eine Greifeinrichtung (21) mit sich öffnenden und schließenden, längs einer Führungsbahn (20,30) verschiebbaren, gegenüberliegenden Klemmwalzen (41,42) zur klemmenden Erfassung der Stranganfänge (28) angeordnet ist, deren Klemmwalzen (41,42) mit den Stranganfängen (28) - nach gemeinsamer Durchtrennung der Stränge (1) mittels eines durch die Fallinie der Stränge (1) bewegten verschiebbaren Trennelements (22,26) - längs der durch den Bereich des Kühlflüssigkeitsbades (9) verlaufenden Führungsbahn (20,30) bis zum Granulator (4) verschoben werden, wo sie die Stränge (1) in den Granulator (4) frei geben.

2. Vorrichtung nach Anspruch 1, **dadurch gekennzeichnet,** daß die Führungsbahn (30) vor dem Granulatoreingang mit einer Endstellung (B,C) versehen ist, in der die Klemmwalzen (41,42) der Greifeinrichtung (21) im Sinne einer Vorschubbewegung der Stränge (1) in Drehung versetzt werden, bis die Stränge (1) vom Granulator (4) erfaßt sind.

3. Vorrichtung nach Anspruch 1 oder 2, **dadurch gekennzeichnet,** daß die Vorkühleinrichtung als mit der Kühlflüssigkeit beschickte Ablaufrinne (5) ausgebildet ist, die unterhalb der Düsen (2) zum Auffangen der Stränge (1) angeordnet ist.

4. Vorrichtung nach Anspruch 3, **dadurch gekennzeichnet,** daß die Ablaufrinne (5) längs einer Schlittenführung (25) verschiebbar und ihr das Trennelement (22,26) zugeordnet ist, das beim Verschieben der Stirnseite der Ablaufrinne (5) durch die Fallinie der Stränge (1) in die Betriebslage die Stränge (1) erfaßt und durchtrennt.

5. Vorrichtung nach einem der Ansprüche 1 bis 4, **dadurch gekennzeichnet,** daß die Führungsbahn (20) durch das Kühlflüssigkeitsbad (9) und um die Führungsrollen (11,12) herum verläuft.

6. Vorrichtung nach einem der Ansprüche 1 bis 5, **dadurch gekennzeichnet,** daß die Führungsrollen (31, 32) derart verschiebbar angeordnet sind, daß sie aus dem Kühlflüssigkeitsbad (9) anhebbar und in dieses absenkbar sind, und daß die Führungsbahn (30) zwischen Kühlflüssigkeitsbad (9) und der angehobenen Stellung der Führungsrollen (31,32) verläuft, wobei die Führungsrollen (31,32) nach Einlaufen der Greifeinrichtung (21) in die Endstellung (C) in die abgesenkte Lage verschoben werden.

## Claims

1. Device for cooling and granulating molten thermoplastic strands (1) emerging from dies, which either drop along the falling line starting at the dies (2) or are guided in an operating position through a coolant bath (9) freely tensioned between guide rollers (11, 12) arranged therein and are then introduced into a granulator (4), a preliminary cooling means (5) being arranged in the region between the dies (2) and the coolant bath (9), carrying the strands (1) emerging from the dies (2) and leading them to the coolant bath (9), characterised in that a gripping means (21) with opposing clamping rolls (41, 42) which can be opened and closed and moved along a guideway (20, 30) in order to grip the front ends (28) of the strands is arranged behind the preliminary cooling means (5), the clamping rolls (41, 42) of which, together with the front ends (28) of the strands, after the strands (1) have been separated simultaneously by means of a displaceable separating element (22, 26) moving through the falling line of the strands (1), are moved along the guideway (20, 30) extending through the region of the coolant bath (9) to the granulator (4), where they release the strands (1) into the granulator (4).

2. Device according to claim 1, characterised in that the guideway (30) is provided in front of the granulator inlet with a final position (B, C) in which the clamping rolls (41, 42) of the gripping means (21) are rotated so as to advance the strands (1) until the strands (1) are gripped by the granulator (4).

3. Device according to claim 1 or claim 2, characterised in that the preliminary cooling means is an outlet channel (5) supplied with the coolant and is arranged below the dies (2) in order to catch the strands (1).

4. Device according to claim 3, characterised in that the outlet channel (5) can be moved along a slide guide (25) and the separating element (22, 26) is associated therewith, said separating element gripping and separating the strands (1) when the end face of the outlet channel (5) is moved through the falling line of the strands (1) into the operating position.

5. Device according to one of claims 1 to 4, characterised in that the guideway (20) extends through the coolant bath (9) and around the guide rollers (11, 12).

6. Device according to one of claims 1 to 5, characterised in that the guide rollers (31, 32) are arranged to move in such a manner that they can be lifted out of and lowered into the coolant bath (9) and that the guideway (30) extends between the coolant bath (9) and the raised position of the guide rollers (31, 32), the guide rollers (31, 32) being moved into the lowered position once the gripping means (21) moves into the final position (C).

## Revendications

1. Dispositif pour refroidir et granuler des boudins (1) sortant à l'état fondu de buses et formés de matières thermoplastiques, qui soit s'abaissent le long de leur ligne de descente, qui commence au niveau des buses (2), soit, dans une position de fonctionnement, sont entraînés à travers un bain de liquide de refroidissement (9) sous une tension libre entre des galets de guidage (11,12) disposés dans ce bain, et sont introduits ensuite dans un granulateur (4), et dans lequel, dans la zone située entre les buses (2) et le bain de liquide de refroidissement (9) est disposé un dispositif de prérefroidissement (5), qui supporte les boudins (1) sortant des buses (2) et les envoie au bain de liquide de refroidissement (9), caractérisé en ce qu'en aval du dispositif de prérefroidissement (5) est disposé un dispositif de saisie (21) comportant des cylindres opposés de serrage (41,42, qui s'ouvrent et se ferment, sont déplaçables le long d'une trajectoire de guidage (20,30) et servent à saisir, en les serrant, les débuts (28) des boudins, et dont les cylindres de serrage (41,42) sont déplacés, avec les débuts (28) des boudins - après un sectionnement commun des boudins (1) au moyen d'un élément de séparation translatable (22,26) déplacé en travers de la ligne de descente des boudins (1) - le long de la trajectoire de guidage (20,30) qui traverse la zone du bain de liquide de refroidissement (9), jusqu'au granulateur (4), dans lequel les cylindres de serrage libèrent les boudins (1) dans le granulateur (4).

2. Dispositif selon la revendication 1, caractérisé en ce que la trajectoire de guidage (30) a, en amont de l'entrée dans le granulateur, une position d'extrémité (B,C), dans laquelle les cylindres de serrage (41,42) du dispositif de saisie (21) sont entraînés en rotation dans le sens d'un déplacement d'avance des boudins (1), jusqu'à ce que ces derniers soient saisis par le granulateur (4).

3. Dispositif selon la revendication 1 ou 2, caractérisé en ce que le dispositif de prérefroidissement est agencé sous la forme d'une goulotte d'évacuation (5) qui est chargée par le liquide de refroidissement et est disposée au-dessous des buses (2) pour la réception des boudins (1).

4. Dispositif selon la revendication 3, caractérisé en ce que la goulotte d'évacuation (5) est déplaçable le long d'un chariot-guide (25) et qu'à cette goulotte d'évacuation est associé l'élément de sectionnement (22, 26), qui, lors du déplacement de la face frontale de la goulotte d'évacuation (5) en travers la ligne de descente des boudins (1), saisit et sectionne les boudins (1), dans la position de fonctionnement.

5. Dispositif selon l'une des revendications 1 à 4, caractérisé en ce que la trajectoire de guidage (20) traverse le bain de liquide de refroidissement (9) et s'étend autour des galets de guidage (11,12).

6. Dispositif selon l'une des revendications 1 à 5, caractérisé en ce que les galets de guidage (31,32) sont disposés de manière à être déplaçables de telle sorte qu'ils peuvent être soulevés hors du bain de liquide de refroidissement (9) et peuvent être abaissés dans ce dernier, et que la trajectoire de guidage (30) s'étend entre le bain de liquide de refroidissement (9) et la position soulevée des galets de guidage (31,32), les galets de guidage (31,32) étant amenés dans la position abaissée une fois que le dispositif de saisie (21) est venu dans la position d'extrémité (C).
